# EUROPEAN PATENT SPECIFICATION

(11) **EP 3 879 615 B1**
(45) Date of publication and mention of the grant of the patent: **28.09.2022**
(21) Application number: 20382169.9
(22) Date of filing: 09.03.2020
(51) Int. Cl.: H01M 10/0525, H01M 10/054, H01M 10/0565

(54) **PVA-POLYESTER AS HIGHLY CONDUCTIVE AND STABLE POLYMER ELECTROLYTES FOR LITHIUM/SODIUM SECONDARY BATTERIES**
PVA-POLYESTER ALS HOCHLEITFÄHIGE UND STABILE POLYMERELEKTROLYTE FÜR LITHIUM/NATRIUM-SEKUNDÄRBATTERIEN
POLYESTER PVA EN TANT QU'ÉLECTROLYTES POLYMÈRES HAUTEMENT CONDUCTEURS ET STABLES POUR BATTERIES SECONDAIRES AU LITHIUM/SODIUM

(43) Date of publication of application: 15.09.2021
(73) Proprietor: Fundación Centro de Investigación Cooperativa de Energías Alternativas, CIC Energigune Fundazioa, 01510 Vitoria-Gasteiz, Álava (ES)
(72) Inventor: ARMAND, Michel, 75014 Paris (FR); DEVARAJ, Shanmukaraj, E-01002 Vitoria-Gasteiz, Álava (ES)
(74) Representative: ABG Intellectual Property Law, S.L.

(56) References cited:
- CN-A- 110 581 311
- JP-A- H1 035 117
- US-A1- 2019 221 879

## Description

### FIELD OF THE INVENTION

The present invention relates to the field of electrochemical energy storage in general and more specifically towards electrolytes for solid state lithium/sodium secondary batteries.

### BACKGROUND OF THE INVENTION

Safety of lithium batteries has become a priority owing to its widespread application in all sectors for energy storage. Solid-state lithium batteries employing polymers/ceramics as electrolytes are considered to be a safe technology due to its advantage over conventional liquid electrolytes (e.g., non-volatility, low flammability, easy processability, and electrochemical and chemical stability). The bottleneck for employing polymer electrolytes in solid-state batteries is its high operational temperature and low electrochemical stability towards oxidation, when compared to ceramic electrolytes.

Polymer electrolytes can be listed under three categories:
(i) Polyelectrolytes (PEs) - PEs are polymers whose repeating units bear an electrolyte group, i.e. which have independent ion-generating groups chemically bound to the macromolecular chain and the presence of counter-ions in order to maintain the electro neutrality of the salt. These types of polymers have low conductivity, namely of about 10⁻¹⁰ - 10⁻¹⁵ Scm⁻¹ in dry conditions.
(ii) Gel Polymer Electrolytes (GPEs) - To improve the ionic conductivity of PEs, one approach is to add low molecular weight plasticizers/organic liquid electrolytes to form a gel polymer electrolyte. In GPEs, both aqueous and non-aqueous solvents swell the host polymer. The swollen lattice thereby permits the motion of ions in the solvent swollen region of the polymer host. Their conductivity depends on the concentration of the solvent in the region that is being swollen. and
(iii) Solvent Free Polymer Electrolytes (SFPE) - SFPE are polymer salt complexes, formed by complexes between salts of alkali metals and a polymer containing solvating heteroatoms.

SFPEs generally consist of polymer matrices and Li salts as solutes without the addition of liquid solvents as plasticizers and can be easily prepared by solvent-casting, hot molding, or extrusion techniques. The choice of polymer matrix is a critical criterion for obtaining a highly conductive and mechanically/electrochemically stable polymer electrolyte at close to ambient temperatures. In order to obtain the aforementioned properties, the polymer matrix should possess better Li⁺ solvation properties and facilitate faster Li salt dissociation. In addition, the polymer matrix is expected to have higher transference number (no.), in particular close to unity, that plays a crucial role in avoiding concentration gradients and determines the c-rate capability of a cell.

Most of the current state of the art SFPE with polyethylene oxide (PEO) as host matrix ideally consists of a lithium salt in the PEO matrix. Under the effect of an electric field, the salt cations tend to hop from one coordinating site (usually composed of more than three electron donor groups) to another. It is believed that most of the conduction of ions originates from the amorphous part of the polymer. PEO-based polymer electrolytes have an ionic conductivity in the range 10⁻⁷ to 10⁻⁸ S/cm at room temperatures (RT) and 10⁻⁵ S/cm with a Li transference number of 0.14 at 70°C.

Modification strategies have been widely applied to improve the ionic conductivity of PEO-based solid polymer electrolytes (SPEs), by optimizing polymer to Li salts ratio, introducing organic plasticizer to form gel polymer electrolytes (GPE) or inorganic fillers (composite polymer electrolyte, CPE), as well as developing single ion conducting polymer electrolytes (block co-polymer of PEO) in order to improve Li transference no. of the electrolytes. These modifications resulted in an improvement in ionic conductivity at the expense of its electrochemical stability, mechanical stability and Li transference no.

Replacing the PEO matrix with other kind of polymer hosts, such as poly(vinyl alcohol) (PVA) and poly(methyl methacrylate) (PMMA), have been widely studied. However, dry electrolytes comprising only a PVA-based polymer suffer from poor ionic conductivity. In particular, a polymer electrolyte comprising a lithium salt and poly(vinyl acetate) (PVAc) has been reported to have poor conductivity (about 8.10⁻⁷ S/cm) at 30 °C [Baskaran et al., Solid State Ionics, 2006, 177, 2679-2682].

PVA-based polymers are of good interest owing to their environmentally friendly nature and biodegradability. The ionic conductivity of such matrices has been improved only by the incorporation of a plasticizer or a liquid electrolyte, but in the dry state these matrices suffer from low ionic conductivity.

Thus, there remains a need for new polymer electrolytes in the dry state that overcome the above-mentioned drawbacks, in particular with respect to ionic conductivity and/or Li transference no., as well as having good electrochemical stability and being environmentally friendly.

### SUMMARY OF THE INVENTION

The inventors have surprisingly found a novel family of PVA-based dry polymer electrolytes with high ionic conductivity, good electrochemical stability and/or improved Li transference no.

Thus, in a first aspect, the present invention relates to a solid electrolyte comprising a polymer and a salt selected from the group consisting of a lithium salt, a sodium salt and mixtures thereof, wherein the polymer comprises at least 50 mol% of recurring units of formula (I) 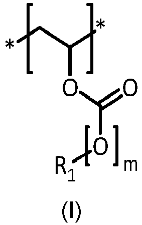 wherein
R₁ is selected from the group consisting of C₂-C₁₀ alkyl and C₂-C₁₀ alkylenyl-C-(=O)R₂,
R₂ is selected from the group consisting of -O-C₁-C₆ alkyl, and
m is 0 or 1.

A second aspect of the present invention relates to a method for the preparation of a solid electrolyte as defined in the first aspect, which comprises:
a) partial or total esterification of the hydroxyl groups of a polymer comprising at least 50 mol% of recurring units of formula (IV) and optionally up to 50 mol% of recurring units of formula (II) 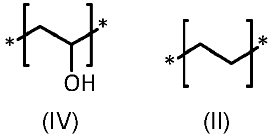 with a compound of formula (IV) or a compound of formula (V) 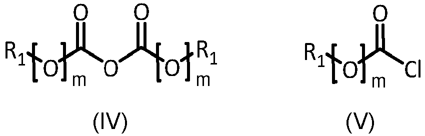 wherein R₁ and m are as defined in the first aspect;
b) when partial esterification is carried out in step a), performing steps b1) and b2):
   b1) formation of carbamate ester groups by reaction of hydroxyl groups of the partially esterified polymer obtained in step a) with an isocyanate of formula (VI) in the presence of a tertiary amine, 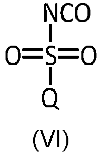 wherein Q is as defined in the first aspect; and
   b2) formation of the lithium or sodium salt of the carbamate ester groups of the polymer obtained in step b1) by treatment of said polymer with Li₂CO₃ for formation of the lithium salt, or Na₂CO₃ or NaHCO₃ for formation of the sodium salt; and
c) addition of a salt selected from the group consisting of a lithium salt, a sodium salt and mixtures thereof as defined in the first aspect, to the polymer obtained in step a) or optionally to the polymer obtained in step b2).

A third aspect of the present invention relates to an energy storage device comprising an solid electrolyte as defined in the first aspect. In a particular embodiment, the energy storage device is a battery.

In a fourth aspect, the invention relates to the use of a solid electrolyte as defined in the first aspect as a separator in a solid-state energy storage device.

In a fifth aspect, the invention relates to the use of a solid electrolyte as defined in the first aspect as a catholyte or as a bilayer electrolyte in combination with other PEO/non-PEO based electrolytes.

### DESCRIPTION OF THE FIGURES

Figure 1 shows the temperature dependent ionic conductivity of an electrolyte comprising polymer 1 and LiTFSI at different ratios of carbonyl oxygen to Li atoms.
Figure 2 shows the temperature dependent ionic conductivity of an electrolyte comprising polymer 2 and LiTFSI at a ratio of carbonyl oxygen to Li atoms of 6:1 (PVA co ethylene ester) and of an electrolyte comprising polymer 1 and LiTFSI at a ratio of carbonyl oxygen to Li atoms of 6:1 (PVA Ester).
Figure 3 shows the temperature dependent ionic conductivity of an electrolyte comprising polymer 1 (PVA Ester) and LiTFSI salt at a ratio of carbonyl oxygen atoms to Li cation (6:1) and of an electrolyte comprising polyvinyl acetate (PVAc) and LiTFSI salt at a ratio of carbonyl oxygen atoms to Li cation (6:1).
Figure 4 shows the cyclic voltammetric test of an electrolyte comprising polymer 1 (PVA Ester) and LiTFSI salt at a ratio of carbonyl oxygen atoms to Li cation (6:1).
Figure 5 shows the linear sweep voltammetry an electrolyte comprising polymer 1 (PVA Ester) and LiTFSI salt at a ratio of carbonyl oxygen atoms to Li cation (6:1).
Figures 6A-6F shows the lithium/plating measurements with PVA Ester and LiTFSI salt at a ratio of carbonyl oxygen atoms to Li cation (6:1).

### DETAILED DESCRIPTION OF THE INVENTION

### Solid electrolyte

The first aspect of the present invention relates to a solid electrolyte comprising a polymer and a salt selected from the group consisting of a lithium salt, a sodium salt and mixtures thereof, wherein the polymer comprises at least 50 mol% of recurring units of formula (I) 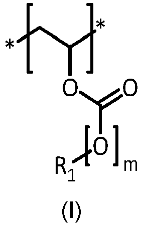 wherein
R₁ is selected from the group consisting of C₂-C₁₀ alkyl and C₂-C₁₀ alkylenyl-C-(=O)R₂,
R₂ is selected from the group consisting of -O-C₁-C₆ alkyl, and
m is 0 or 1.

The term "solid electrolyte" refers to a solvent-free electrolyte, i.e. an electrolyte comprising less than 5 wt% of a solvent with respect to the weight of the electrolyte, preferably less than 4 wt%, less than 3 wt%, less than 2 wt%, less than 1 wt%, less than 0.5 wt%, less than 0.1 wt%, or less than 0.05 wt%. In particular, the electrolyte of the invention is solvent-free, i.e. no solvent is present. The term "solvent" refers to any compound liquid at room temperature (25 °C). Examples of solvents are organic solvents (such as ethylene carbonate (EC), propylene carbonate (PC), butylene carbonate (BC), vinylene carbonate (VC), dimethyl carbonate (DMC), diethyl carbonate (DEC), ethyl methyl carbonate (EMC), dimethyl phthalate (DMP), diethylphthalate (DEP), dibutyl phthalate (DBP), dioctyl phthalate (DOC), γ-butyrolactone (GBL), sulfolane, succinonitrile, acetyl triethyl citrate, among others), and ionic liquids.

The polymer is based on ester or carbonate derivatives of polyvinyl alcohol. Thus, the polymer comprises recurring units having formula (I) depicted above. The term "recurring unit" refers to repeating units that are linked together to form the polymer structure, except for the end-groups which are not represented but correspond to an H atom or OH group (depending on the monomers used) on each terminal end of the polymer, preferably an H atom on each terminal end of the polymer. A polymer comprising only one type of recurring unit is a homopolymer. A polymer comprising two or more types of recurring units is a copolymer. Copolymers such as block copolymers, wherein each block consists of single type of recurring unit. In all the formulae depicted in the present invention with respect to a (recurring) unit, the * represents attachment point to another (recurring) unit or to an end-group. For example, a homopolymer consisting of 4 recurring units of formula (la) would have the following structure (lb), wherein the end-groups are H atoms.

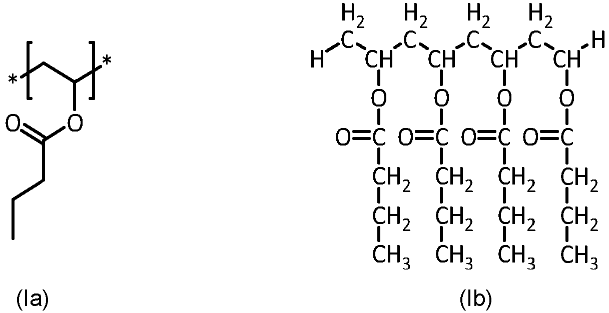

The polymer of the solid electrolyte of the invention comprises at least 50 mol% of recurring units of formula (I) with respect to the total recurring units of the polymer structure, preferably at least 55 mol%, more preferably at least 59 mol%, more preferably at least 60 mol%, more preferably at least 61 mol%, more preferably at least 62 mol%, more preferably at least 63 mol%, more preferably at least 64 mol%, more preferably at least 65 mol%, more preferably at least 66 mol%, more preferably at least 67 mol%, more preferably at least 68 mol%, more preferably at least 69 mol%, more preferably at least 70 mol%, more preferably at least 71 mol%, more preferably at least 72 mol%, more preferably at least 73 mol%, even more preferably 100 mol% (i.e. a homopolymer).

In the context of the present invention, the term "recurring units" refers to a unit that is present more than once, i.e. two or more times, in the polymer.

In the context of the present invention, the term "alkyl" designates a linear or branched saturated monovalent hydrocarbon chain containing from the indicated number of carbon atoms, preferably from two to ten. Examples of alkyls are methyl, ethyl, propyl, 2-propyl, n-butyl, isobutyl, sec-butyl, tert-butyl, n-pentyl, isopentyl, sec-pentyl, tert-pentyl, neopentyl, and the like.

In the context of the present invention, the term "alkylenyl" designates a linear or branched saturated divalent hydrocarbon chain containing from the indicated number of carbon atoms, preferably from two to ten. Examples of alkylenyls are methylenyl (-CH₂-), ethylenyl (-CH₂CH₂-), trimethylenyl (-CH₂CH₂CH₂-) or tetramethylenyl (-CH₂CH₂CH₂CH₂-), methylethylenyl, (-CH(CH₃)CH₂-), pentamethylenyl (-CH₂CH₂CH₂CH₂CH₂-), hexamethylenyl (-CH₂CH₂CH₂CH₂CH₂CH₂-) and the like.

In the recurring units of formula (I), R₁ is selected from the group consisting of C₂-C₁₀ alkyl and C₂-C₁₀ alkylenyl-C-(=O)R₂; preferably from the group consisting of C₂-C₄ alkyl and C₂-C₄ alkylenyl-C-(=O)R₂; more preferably from the group consisting of ethyl, propyl and -(CH₂)₃-C(=O)OMe; even more preferably R₁ is propyl.

In the recurring units of formula (I), R₂ is -O-C₁-C₆ alkyl, preferably -O-C₁-C₃ alkyl, even more preferably methoxy (-OCH₃).

In a particular embodiment, in the recurring units of formula (I) R₁ is selected from the group consisting of C₂-C₁₀ alkyl and C₂-C₁₀ alkylenyl-C-(=O)R₂; and R₂ is -O-C₁-C₆alkyl.

In another particular embodiment, in the recurring units of formula (I) R₁ is selected from the group consisting of C₂-C₄ alkyl and C₂-C₄ alkylenyl-C-(=O)R₂; and R₂ is -O-C₁-C₃ alkyl.

In another particular embodiment, in the recurring units of formula (I) R₁ is selected from the group consisting of ethyl, propyl and -(CH₂)₃-C(=O)OMe; even more preferably R₁ is propyl.

In a preferred embodiment, in the recurring units of formula (I) comprised in the polymer of the solid electrolyte of the present invention, m is 0, i.e. the recurring units have the formula (Ic) 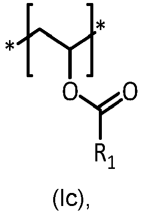 wherein R₁ is as defined herein. As previously explained, the * represents attachment point to another (recurring) unit or to an end-group (e.g. H or OH, preferably H).

In a preferred embodiment, the polymer of the solid electrolyte of the present invention is a homopolymer, which consists only of recurring units of formula (I) and having H atoms as end-groups of the polymer.

In another preferred embodiment, the polymer of the solid electrolyte of the present invention is a copolymer, i.e. it comprises recurring units of formula (I) and other recurring units. In particular, said other recurring units are up to 50 mol% of recurring units of formula (II) (i.e. ethylene units).

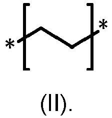

As previously explained, the * represents attachment point to another (recurring) unit or to an end-group (e.g. H or OH, preferably H).

In said preferred embodiment, the polymer of the solid electrolyte of the invention comprises up to 50 mol% of recurring units of formula (II) with respect to the total recurring units of the polymer structure, preferably from 20 mol% to 50 mol%, more preferably from 20 mol% to 45 mol%, more preferably from 25 mol% to 40 mol%, even more preferably about 27 mol% or about 38 mol%.

In a particular embodiment, the polymer consists of at least 50 mol% of recurring units of formula (I) and up to 50 mol% of recurring units of formula (II). The end-groups of the polymer being H atoms.

In another particular embodiment, the polymer consists of at least 60 mol% of recurring units of formula (I) and up to 40 mol% of recurring units of formula (II). The end-groups of the polymer being H atoms.

In another particular embodiment, the polymer consists of from 60 mol% to 75 mol% of recurring units of formula (I) and from 25 mol% to 40 mol% of recurring units of formula (II). The end-groups of the polymer being H atoms.

In another preferred embodiment, the polymer of the solid electrolyte of the present invention is a copolymer, i.e. it comprises at least 50 mol% of recurring units of formula (I) and other recurring units. In particular, said other recurring units are up to 25 mol% of recurring units of formula (III) 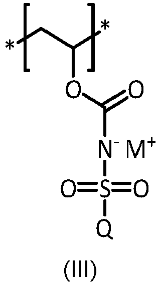 wherein
Q is selected from the group consisting of F and CF₃, and
M⁺ is selected from the group consisting of Li⁺ and Na⁺. As previously explained, the * represents attachment point to another (recurring) unit or to an end-group (e.g. H or OH, preferably H).

In said preferred embodiment, the polymer of the solid electrolyte of the invention comprises up to 25 mol% of recurring units of formula (III) with respect to the total recurring units of the polymer structure, preferably from 10 mol% to 20 mol%, more preferably from 10 mol% to 15 mol%.

In a particular embodiment, Q is F.

In another particular embodiment, M⁺ is Li⁺.

In another particular embodiment, Q is F and M⁺ is Li⁺.

When the solid electrolyte of the present invention comprises recurring units of formula (III), the structure of the polymer already comprises the lithium salt or sodium salt whose presence is essential for the solid electrolyte. Thus, when the polymer comprises recurring units of formula (III) the presence of a separate lithium salt, sodium salt or mixtures thereof is optional. However, an additional lithium or sodium salt as defined herein which does not form part of the polymer structure may also be added to a polymer comprising recurring units of formula (III) to form the solid electrolyte of the invention.

In a particular embodiment, the polymer of the solid electrolyte of the present invention is a copolymer, which comprises at least 50 mol% of recurring units of formula (I), up to 50 mol% of recurring units of formula (II) and up to 25 mol% of recurring units of formula (III); preferably at least 50 mol% of recurring units of formula (I), from 20 to 40 mol% of recurring units of formula (II) and from 10 to 20 mol% of recurring units of formula (III).

In a particular embodiment, the polymer consists of at least 50 mol% of recurring units of formula (I), up to 50 mol% of recurring units of formula (II) and up to 25 mol% of recurring units of formula (III). The end-groups of the polymer being H atoms.

In another particular embodiment, the polymer consists of from 50 mol% to 70 mol% of recurring units of formula (I), of from 20 mol% to 40 mol% of recurring units of formula (II) and from 10 mol% to 20 mol% of recurring units of formula (III). The end-groups of the polymer being H atoms.

In a particular embodiment, the polymer does not comprise any unit of formula (A), (B), (C), (D), (E) and/or (F).

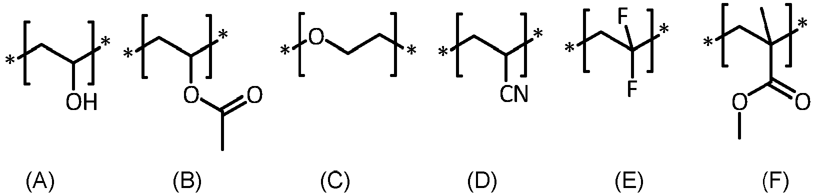

As previously explained, the * represents attachment point to another (recurring) unit or to a terminal atom (e.g. H or OH; in particular H when the monomer present at the terminal end of the polymer is (A), (B), (D), (E) or (F); and OH or H when the monomer present at the terminal end of the polymer is (C)).

In a particular embodiment, the polymer is selected from the group consisting of:
a) an homopolymer having recurring units of formula (la) (i.e. 100% of recurring units of formula (Ia)) 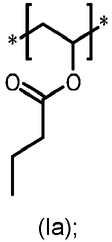
b) a copolymer consisting of at lest 50 mol% of recurring units of formula (Id) and up to 50 mol% of recurring units of formula (II) 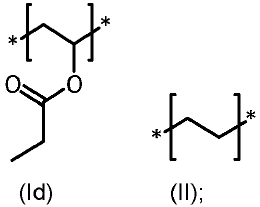
c) a copolymer consisting of at least 50 mol% of recurring units of formula (le) and up to 50 mol% of recurring units of formula (II) 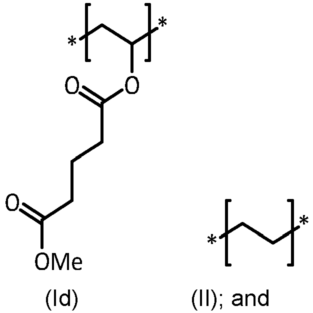
d) a copolymer consisting of recurring units of at least 50 mol% of recurring units of formula (Ia), less than 50 mol% of recurring units of formula (II) and up to 25 mol% of recurring units of formula (IIIa)

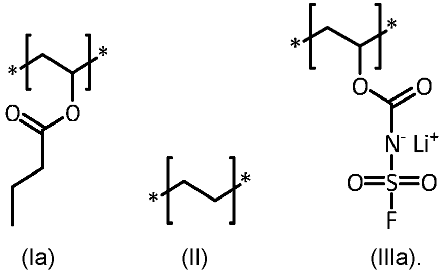

As previously explained, the * represents attachment point to another (recurring) unit or to an end-group (e.g. H or OH, preferably H).

In a particular embodiment, the polymer is selected from the group consisting of:
a) an homopolymer having recurring units of formula (la) (i.e. 100% of recurring units of formula (Ia)) 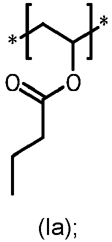
b) a copolymer consisting of from 60 mol% to 75 mol% of recurring units of formula (Id) and 25 mol% to 40 mol% of recurring units of formula (II) 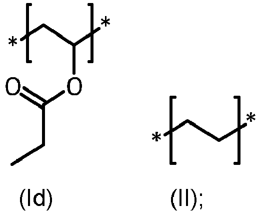
c) a copolymer consisting of from 60 mol% to 75 mol% of recurring units of formula (le) and 25 mol% to 40 mol% of recurring units of formula (II) 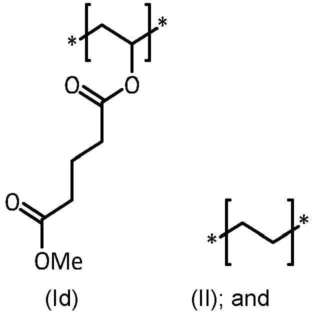
d) a copolymer consisting of recurring units of 50 mol% to 70 mol% of recurring units of formula (Ia), 20 mol% to 40 mol% of recurring units of formula (II) and 10 mol% to 20 mol% of recurring units of formula (IIIa)

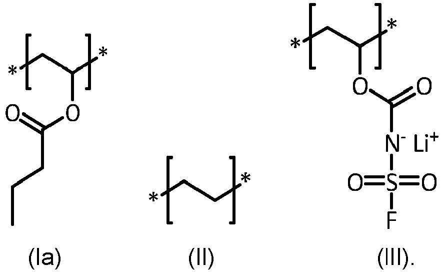

As previously explained, the * represents attachment point to another (recurring) unit or to an end-group (e.g. H or OH, preferably H).

In the context of the present invention, it has to be understood that the mol% of recurring units add up to 100 mol%. For example, in a copolymer as defined in d) above the mol% of recurring units of formula (Ia), (II) and (IIIa) is comprised in the ranges defined therein and the addition of said mol% cannot be more than 100%.

In a particular embodiment, the average molecular weight of the polymer is from 10,000 to 5×10⁶ Da, preferably from 50,000 to 1×10⁶ Da, more preferably from 50,000 to 350,000 Da.

The solid electrolyte of the present invention comprises a sodium salt, a lithium salt or mixtures thereof. The term "salt" refers to a ionic compound consisting of a cation (Na⁺ or Li⁺) and an anion. Any suitable salt can be used. Preferably, the salt is selected from the group consisting of LiCF₃SO₃ (LiTf), LiClO₄, LiPF₆, Li[FSO₂)₂N] (LiFSI), Li[CF₃SO₂)₂N] (LiTFSI), lithium-2-trifluoromethyl-4,5-dicyano-imidazole (LiTDI), NaCF₃SO₃ (NaTf), NaClO₄, NaPF₆, Na[FSO₂)₂N] (NaFSI), Na[CF₃SO₂)₂N] (NaTFSI), sodium-2-trifluoromethyl-4,5-dicyano-imidazole (NaTDI) and mixtures thereof. In a more preferred embodiment, the salt is LiTFSI. As previously explained, when the polymer of the solid electrolyte comprises recurring units of formula (III) the sodium and/or lithium salt is already present in the structure of said recurring units. In these embodiments, the addition of the preferred salts described above (which do not form part of the structure of the polymer) is optional.

In a preferred embodiment, the molar ratio of carbonyl-oxygen atoms (i.e. oxygen atoms forming part of a carbonyl group (C=O)) to lithium and sodium cations present in the solid electrolyte is from 3:1 to 18:1, preferably from 5:1 to 8:1, more preferably about 6:1.

### Method for the preparation of the solid electrolyte

In a second aspect, the present invention relates to a method for the preparation of a solid electrolyte as defined in any of the preceding claims, which comprises:
a) partial or total esterification of the hydroxyl groups of a polymer comprising at least 50 mol% of recurring units of formula (IV) and optionally up to 50 mol% of recurring units of formula (II) 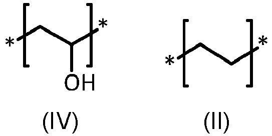 with a compound of formula (IV) or a compound of formula (V) 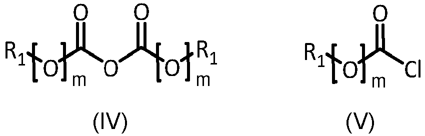 wherein R₁ and m are as defined in the first aspect;
b) when partial esterification is carried out in step a), performing steps b1) and b2):
   b1) formation of carbamate ester groups by reaction of hydroxyl groups of the partially esterified polymer obtained in step a) with an isocyanate of formula (VI) in the presence of a tertiary amine, 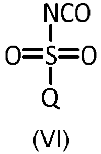 wherein Q is as defined in the first aspect; and
   b2) formation of the lithium or sodium salt of the carbamate ester groups of the polymer obtained in step b1) by treatment of said polymer with Li₂CO₃ for formation of the corresponding lithium salt, or Na₂CO₃ or NaHCO₃ for formation of the corresponding sodium salt; and
c) addition of a salt selected from the group consisting of a lithium salt, a sodium salt and mixtures thereof as defined in the first aspect, to the polymer obtained in step a) or optionally to the polymer obtained in step b2).

Step a) is the partial or total esterification of the hydroxyl groups of a polymer comprising at least 50 mol% of recurring units of formula (IV) and optionally up to 50 mol% of recurring units of formula (II).

Partial esterification refers to a reaction wherein not all OH groups of the polymer are esterified, i.e. the polymer resulting from step a) still has free OH groups, whereas total esterification refers to the reaction of all OH groups to form the corresponding ester, i.e. the polymer resulting from step a) has no free OH groups.

Total esterification is performed in step a) when the polymer present in the solid electrolyte has no recurring units of formula (III), whereas partial esterification is performed in step a) when the polymer present in the solid electrolyte comprises recurring units of formula (III).

The polymer comprising at least 50 mol% of recurring units of formula (IV) and optionally up to 50 mol% of recurring units of formula (II) that is esterified in step a) is commercially available or can be obtained by routine experimentation procedures known to the skilled person. The polymer consisting of only recurring units of formula (IV) is a poly(vinyl alcohol), i.e. 100% recurring units of formula (IV). The polymer consisting of recurring units of formula (IV) and of formula (II) is a copolymer of poly(vinyl alcohol)-co-ethylene. The amount (%) of recurring units of formula (IV) and of formula (II) are as previously defined for the amount of recurring units of formula (I) and of formula (II), respectively, in the polymer of the solid electrolyte according to the first aspect of the invention.

In the esterification reaction, a compound of formula (IV) or a compound of formula (V) 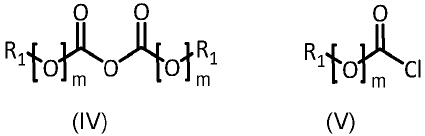 are used to react with the hydroxyl groups of the recurring units of formula (IV) present in the polymer comprising recurring units of formula (IV) and optionally recurring units of formula (II).

When m is 0, the compound of formula (IV) is an acid anhydride and the compound of formula (V) is an acyl chloride.

The esterification proceeds by conventional reaction conditions, such as in the presence of a suitable solvent, e.g. dimethylsulfoxide (DMSO), pyridine, N-methyl-imidazole, dimethylformamide (DMF) or mixtures thereof, preferably DMSO. In particular, the polymer comprising at least 50 mol% of recurring units of formula (IV) and optionally up to 50 mol% of recurring units of formula (II) is solubilized in the solvent before addition of the compound of formula (IV) or (V), preferably a temperature in the range of 20 °C to 130 °C. Preferably, esterification is carried out in the presence of dimethylaminopyridine (DMAP). Preferably, the reaction is carried out from 12 to 48 h, more preferably from 20 to 30 h, still more preferably from 22 to 26 h. Once the esterification has finished, the resulting polymer may be isolated by precipitation in water, recovery of the precipitated polymer (e.g. by filtration) and optional purification by dissolution of the recovered polymer in acetone and further precipitation in water.

Step a) provides a polymer comprising at least 50 mol% of recurring units of formula (I), optionally up to 50 mol% of recurring units of formula (II) and devoid of recurring units of formula (III).

When the polymer of the solid electrolyte does not comprise recurring units of formula (III), the polymer obtained in step a) corresponds to the polymer used said electrolyte. However, when the polymer of the solid electrolyte comprises recurring units of formula (III), step b) is carried out, which comprises steps b1) and b2). As explained above with respect to step a), when the polymer of the solid electrolyte comprises recurring units of formula (III) a partial esterification takes place in step a), so the polymer resulting from step a) still comprises free OH groups.

Thus, in step b1) these free OH groups are reacted with an isocyanate of formula (VI) in the presence of a tertiary amine, 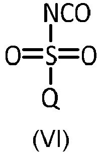 wherein Q is as defined in the first aspect, to give the corresponding carbamate ester, which is then treated in step b2) with Li₂CO₃ for formation of the lithium salt, or Na₂CO₃ or NaHCO₃ for formation of the sodium salt, to give the corresponding lithium or sodium salt of the carbamate ester groups.

Formation of the carbamate ester (step b1)) is preferably carried out by dissolving the polymer obtained in step a) in a suitable solvent, such as acetonitrile, acetone, ethyl acetate, cyclopentanone, methyl ethyl ketone, dimethylformamide (DMF), N-methyl pyrrolidone, dimethylsulfoxide (DMSO) and mixtures thereof, and addition of the isocyanate (VI). The reaction is preferably carried out in the presence of a tertiary amine, such as pyridine, triethylamine, 1,4-diazabicyclo[2.2.2]octane (DABCO), and mixtures thereof. The reaction is preferably carried out in anhydrous conditions to avoid side reactions of the isocyanate. Anhydrous is preferably understood as less than 5 wt% of water with respect to the total amount of polymer obtained in step a), isocyanate (VI), solvent and tertiary amine used in step b1), preferably less than 1 wt%, more preferably less than 0.5 wt%, more preferably less than 0.1 wt%. Preferably, the reaction is carried out at a temperature in the range of -5 °C to 5 °C. Preferably, the reaction is carried out from 12 to 48 h, more preferably from 20 to 30 h, still more preferably from 22 to 26 h.

Subsequently, step b2) is performed, which is the formation of the lithium or sodium salt of the carbamate ester groups of the polymer obtained in step b1) by treatment of said polymer with Li₂CO₃ for formation of the corresponding lithium salt or with Na₂CO₃ or NaHCO₃ for formation of the corresponding sodium salt.

Preferably, the Li₂CO₃ Na₂CO₃ or NaHCO₃ salt is directly added to the mixture obtained in step b1), without prior isolation of the polymer. Preferably, the reaction is carried out from 60 to 80 h, more preferably from 68 to 76 h. The resulting polymer may be isolated by precipitation in ether.

Step b) provides a polymer comprising at least 50 mol% of recurring units of formula (I), up to 25 mol% recurring units of formula (III) and optionally up to 50 mol% of recurring units of formula (II).

Step c) is the addition of a salt selected from the group consisting of a lithium salt, a sodium salt and mixtures thereof as defined in the first aspect, to the polymer obtained in step a) or optionally to the polymer obtained in step b2). This step provides the solid electrolyte as defined in the first aspect.

Step c) is optional when step b) has been carried out since step b2) already provides a sodium or lithium salt within the polymer structure.

The solid polymer electrolyte is obtained by dissolution of the polymer and a suitable lithium or sodium salt in a common solvent followed by evaporation of the solvent, or mechanically mixing the suitable lithium or sodium salt with the polymer in molten state (in which case no solvent is needed). The sodium and lithium salts are those defined in the first aspect, such as LiCF₃SO₃ (LiTf), LiClO₄, LiPF₆, Li[FSO₂)₂N] (LiFSI), Li[CF₃SO₂)₂N] (LiTFSI), lithium-2-trifluoromethyl-4,5-dicyano-imidazole (LiTDI), NaCF₃SO₃ (NaTf), NaClO₄, NaPF₆, Na[FSO₂)₂N] (NaFSI), Na[CF₃SO₂)₂N] (NaTFSI), sodium-2-trifluoromethyl-4,5-dicyano-imidazole (NaTDI) and mixtures thereof; preferably LiTFSI. The polymer corresponds to that obtained in step a) or optionally to the polymer obtained in step b2), These salts are added to the polymer obtained in step a) or b2) in an amount to provide a molar ratio of carbonyl-oxygen atoms to lithium and sodium cations in the solid electrolyte as defined in the first aspect, i.e. from 3:1 to 18:1, preferably from 5:1 to 8:1, more preferably about 6:1. Examples of suitable solvents are acetonitrile, acetone, cyclopentanone, n-methyl-2-pyrolidone, DMF, DMSO, H₂O and mixtures thereof. Step c) is typically carried out at a temperature from 20 to 130 °C. Step c) is typically carried out for 6 to 12 h.

### Devices and uses of the solid electrolyte

The solid electrolyte of the present invention have high ionic conductivity as well as good electrochemical stability. Thus, it is suitable for its use in energy storage devices, in particular in solid-state energy storage devices.

Thus, in a third aspect, the present invention relates to an energy storage device comprising a solid electrolyte as defined in the first aspect, a negative electrode and a positive electrode. Preferably, the energy storage device is a solid-state energy storage device. In a particular embodiment, the battery is a lithium or sodium battery, more preferably is a secondary lithium or sodium battery.

The term "secondary battery" refers to a device that stores electrical energy in chemical form and converts the stored chemical energy into electrical energy to generate electricity when needed. The secondary battery is also referred to as a rechargeable battery because it can be recharged repeatedly. Secondary batteries are generally used in applications requiring low electric power, such as equipment to start a vehicle, a mobile device, a tool, an uninterruptible power supply, and the like.

In a preferred embodiment, the negative electrode is a Li metal or Na metal negative electrode and the positive electrode comprises a material in the form of a spinel, olivine or layered oxide structure.

The term "spinel" refers to cubic close-packed oxides with eight tetrahedral and four octahedral sites per formula unit. The tetrahedral spaces are smaller than the octahedral spaces.

The term "olivine" refers to the minerals, with the formula (Mg²⁺, Fe²⁺)SiO₄, whose structure is a hexagonal, close-packed array of oxygen ions with half of the octahedral sites occupied with magnesium or iron ions and one-eighth of the tetrahedral sites occupied by silicon ions, and also refers to minerals with related structure related to that of the mineral olivine, such as tephroite (Mn₂SiO₄), monticellite (CaMgSiO₄) and kirschsteinite (CaFeSiO₄).

The term "layered" refers to materials with the general formula AₓMO₂ (where A is Li or Na and M is a transition metal, such as Sc, Ti, V, Cr, Mn Fe, Co, Ni, Cu, Zn, Y, Zr, Nb, Mo, Tc, Ru, Rh, Pd, Ag, Cd, La, Hf, Ta, W, Re, Os, Ir, Pt, Au, Hag, Ac, Rf, Db, Sg, Bh, Hs, Mt, Ds, Rg, Cn) with a Cdl2 structure, which has a hexagonal close packed array of iodide ions with Cd(II) sitting in 1/2 of the octahedral sites and between adjacent layers of I's.

Examples of suitable positive electrode materials are transition metal oxides such as manganese dioxide and vanadium pentoxide, transition metal chalcogenides such as iron sulfide and titanium sulfide, and lithium compounds thereof, such as lithium transition metal oxides (e.g. lithium cobalt oxide, lithium manganese oxide, lithium cobalt nickel oxide).

The energy storage device may operate at a temperature in the range of from 20 °C to 80 °C. The energy is stored by converting electrical power to chemical energy and when required the chemical energy is again converted back to electrical power.

A further aspect of the invention relates to the use of a solid electrolyte as defined in the first aspect as a separator in a solid-state energy storage device.

The electrolyte that acts as a "separator" keeps the two electrodes of a battery apart to prevent electrical short circuits while also allowing the transport of ionic charge carriers that are needed to close the circuit during the passage of current in an electrochemical cell.

Another aspect of the invention relates to the use of a solid electrolyte as defined in the first aspect as a catholyte or as a bilayer electrolyte in combination with other PEO/non-PEO based electrolytes.

The term "catholyte" refers to the part of an electrolyte which is on the cathode side of an electrochemical cell that is effectively divided into two compartments.

The term "PEO" refers to poly(ethylene oxide).

Examples of non-PEO based electrolytes are polyvinylidene fluoride (PVdF), polymethylmethacrylate (PMMA), polyacrylonitrile (PAN) polyvinyl acetate (PVAc), polypropylene oxide (PPO), polyethylene imine (PEI), polyethylene sulphide (PES).

In the context of the present invention, the term about is to be interpreted as the value it refers to ±10% of said value, preferably ±5%.

The following examples represent specific embodiments of the present invention.

### Examples

### Materials and methods

### Differential Scanning Calorvmetrv

Differential scanning calorimetry (DSC) have been measured using a differential scanning calorimeter Q2000 (TA Instruments) from 80° to 200 °C with a heating and cooling rate of 10°C min⁻¹. Samples were hermetically sealed in aluminium crucibles under argon atmosphere. The temperature scan was at the rate of 10 °C/min. The sample were subjected to an initial heating scan up to 70 °C, followed by cooling to -80 °C and the spectra were recorded for the following scan from -80 °C up to 150 °C.

### Ionic conductivity

Different ratios of polymers: LiTFSI salt were prepared. Samples were sandwiched between 2 SS discs along with a kapton film template to prevent seeping of polymer electrolyte. CR2032 cells were assembled and the conductivity was taken from room temperature to 80 °C with a stabilization period of 30 to 40 min between each temperature using a VMP3 (Biologic^{®}, Claix, France) system .

### Example 1: Synthesis of polymer 1

0.44g (10 mmoles) of polyvinyl alcohol was added to 70 ml of DMSO at room temperature. 11 mmoles of butyric anhydride was added under stirring in the presence of 1.5 g (11 mmoles) of dimethyl amino pyridine (DMAP). The stirring was continued for 24 hours at room temperature (RT). The resulting solution was centrifuged and viscous solution was further poured into 250 ml water. The precipitated polymer was then dissolved in acetone and reprecipitated in water for three times. The polymer 1 obtained was further dried under vacuum at 50°C. The structure of the polymer thus obtained is shown below.

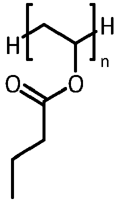

The DSC thermogram of polymer 1 allowed to measured the T_{g} of said polymer, which was around -18 °C.

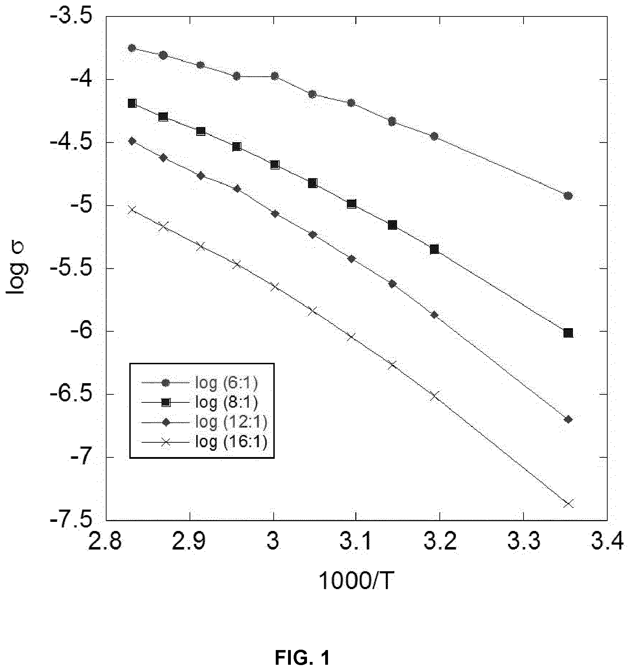

The temperature dependent ionic conductivity of an electrolyte comprising polymer 1 and LiTFSI at different ratios of carbonyl oxygen to Li atoms was studied (16:1, 12:1, 8:1 and 6:1). The results are shown in Figure 1. As it can be seen, a maximum ionic conductivity was observed for the ratio 6:1 with an ionic conductivity of 1.3 × 10⁻⁴ Scm⁻¹ at 70 °C.

### Example 2: Synthesis of polymer 2

0.44g (10 mmoles) of poly(vinyl alcohol-co-ethylene) with 27% ethylene units content (PVA-E27) was added to 70 ml of DMSO at room temperature. 11 mmoles of propionic anhydride was added under stirring in the presence of 1.5g (11 mmoles) of dimethyl amino pyridine (DMAP). The stirring was continued for 24 hours at RT. The resulting solution was centrifuged and viscous solution was further poured into 250 ml water. The precipitated polymer was then dissolved in acetone and reprecipitated in water for three times. The polymer 2 obtained was then dried under vacuum at 50°C. Polymer 2 comprises the recurring units shown below.

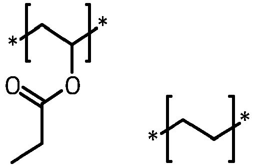

The DSC thermogram of polymer 2 allowed to measure the T_{g} of said polymer which was around -18 °C.

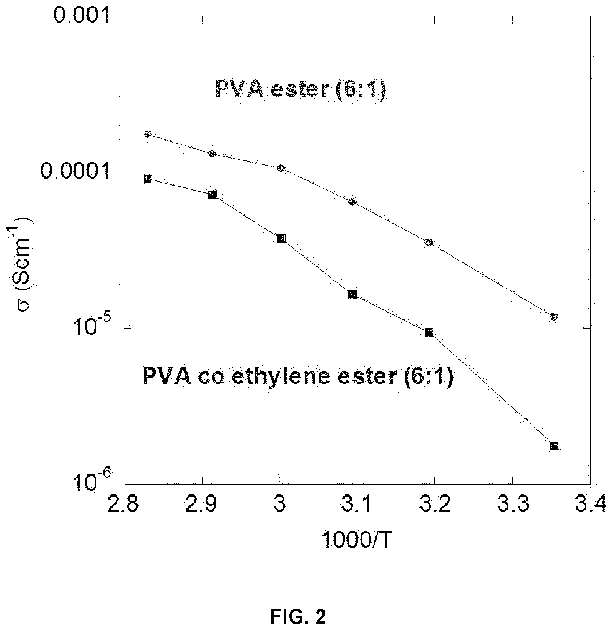

The temperature dependent ionic conductivity of an electrolyte comprising polymer 2 and LiTFSI at a ratio of carbonyl oxygen to Li atoms of 6:1 (PVA co ethylene ester) was compared with that of an electrolyte comprising polymer 1 and LiTFSI at a ratio of carbonyl oxygen to Li atoms of 6:1 (PVA Ester). The results are shown in Figure 2. As it can be seen, an ionic conductivity of 0.72 × 10⁻⁴ Scm⁻¹ was achieved at 70 °C for the electrolyte comprising polymer 2 and an ionic conductivity of 1.3 × 10⁻⁴ Scm⁻¹ at 70 °C for the electrolyte comprising polymer 1.

### Example 3: Synthesis of polymer 3

0.447g (10 mmole) of poly(vinyl alcohol-co-ethylene) with 38% ethylene units content (PVA-E38) was added to 70 ml of 1-methylimidazole at room temperature. 1.964 g (11 mmole) of methyl adipoyl chloride was added under stirring. The stirring was continued for 24 hours at RT. The resulting solution was centrifuged and viscous solution was further poured into 250 ml water. The precipitated polymer was then dissolved in acetone and reprecipitated in water for three times. The polymer obtained was then dried under vacuum at 50°C. Polymer 3 comprises the recurring units shown below.

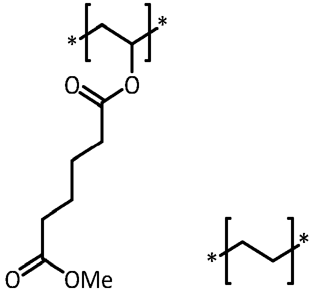

The DSC thermogram of polymer 3 allowed to measure the T_{g} of said polymer, which was around -41.3 °C.

### Example 4: Synthesis of polymer 4

5.443 g (10 mmoles) of polyvinyl alcohol-co-ethylene with 27% ethylene units content (PVA-E27) were dissolved in 70 ml of DMSO at 120°C. The viscous solution was cooled down to 25°C and 12.13 g (8.2 mmoles) of butyric anhydride and 10.50 g (8.6 mmoles) of dimethylaminopyridine (DMAP) were added and the stirring continued for 24 hours. The resulting solution was poured into 250 ml of water and the precipitated polymer was filtered. Purification was performed by dissolving the polymer in acetone and followed by reprecipitation is water. The process was repeated three times and the polymer was dried under vacuum at 50°C. The compound is a partial ester of PVA-E27 with 82% of the hydroxyl functionalities attached to butyryl moieties. 3 g of this polymer were dissolved in dry acetonitrile under stirring and cooled to 0°C. 0.721 g of fluorosulfonyl isocyanate (FSO₂N=C=O) and 0.5 g of pyridine were added dropwise. The reaction was left to proceed for 24 hours and 250 mg of lithium carbonate were added, the stirring was continued for 72 hours and the suspension was filtered to remove excess Li₂CO₃. The polymer electrolyte was precipitated in ether and dried under vacuum. Polymer 4 comprises the recurring units shown below.

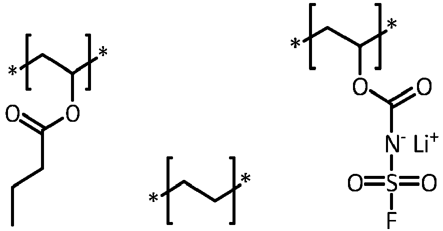

### Example 5: Comparison of ionic conductivity of electrolytes comprising polymer 1 (PVA Ester) or polyvinyl acetate (PVAc)

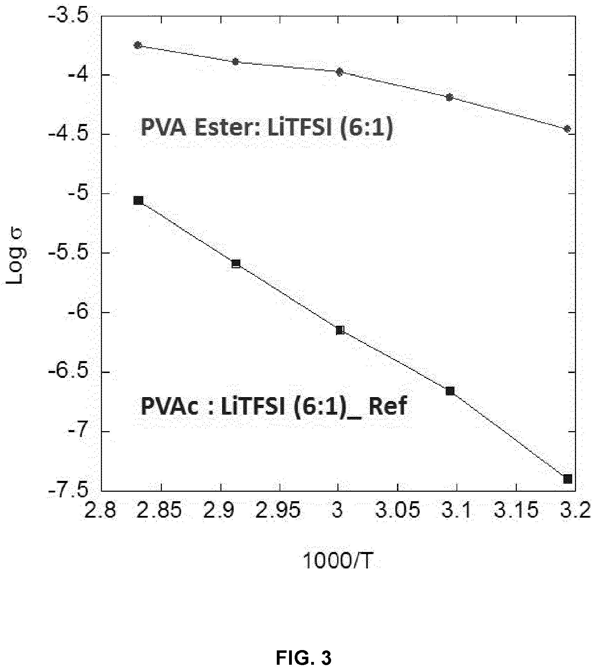

Polymer electrolytes were prepared with the PVAc ester commercially available as a host matrix and LiTFSI salt. The ratio of carbonyl oxygen atoms to Li cation was 6:1. The conductivity at different temperature was measured and compared with that of an electrolyte comprising polymer 1 (PVA Ester) and LiTFSI salt at the same ratio of carbonyl oxygen atoms to Li cation (6:1). The results are shown in Figure 3. The conductivity of the electrolyte comprising the unmodified PVAc ester with LiTFSI was found to have a low ionic conductivity of 2.59 × 10⁻⁶ Scm⁻¹ at 70 °C whereas the conductivity of the electrolyte of the present invention was 1.3 × 10⁻⁴ Scm⁻¹ at the same temperature

### Example 6: Lithium metal/stripping properties of an electrolyte comprising polymer 1

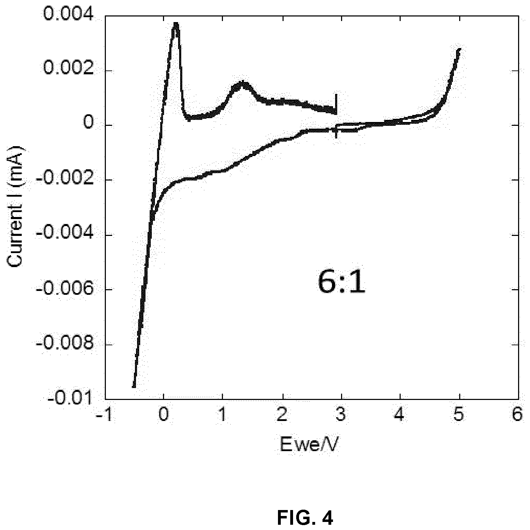

In order to estimate the lithium metal/stripping properties of the electrolytes of the invention, the electrolyte comprising polymer 1 and LiTFSI salt at a ratio of carbonyl oxygen atoms to Li cation 6:1 was subjected to cyclic voltammetric tests using a VMP3 (Biologic^{®}, Claix, France) system. Polymer electrolytes was sandwiched between a SS working electrode and a Li reference / counter electrode and CR2032 coin cells were assembled and cycled between -0.5 to 5V at a scan rate of 1 mv/sec. As shown in Figure 4, the electrolytes of the invention show good Li plating/stripping behavior.

### Example 7: Li⁺ transference number

In order to estimate the Li⁺ transference no. of the polymer electrolytes of the invention, the electrolyte comprising polymer 1 and LiTFSI salt at a ratio of carbonyl oxygen atoms to Li cation 6:1 was chosen and Bruce & Vincent technique [Bruce, P. G., Evans, J., & Vincent, C. A. (1988). Conductivity and transference number measurements on polymer electrolytes. Solid State Ionics, 28-30(PART 2), 918-922] was employed using a VMP3 (Biologic^{®}, Claix, France) system , i.e. to a symmetric cell with 2 Li electrodes, a small potential was applied until it reaches a steady state. The initial and final impedance of the cell before and after the steady state respectively was measured to obtain the final transference no. The Li⁺ transference no measured for the modified ester with single ester group was 0.54.

### Example 8: Electrochemical stability

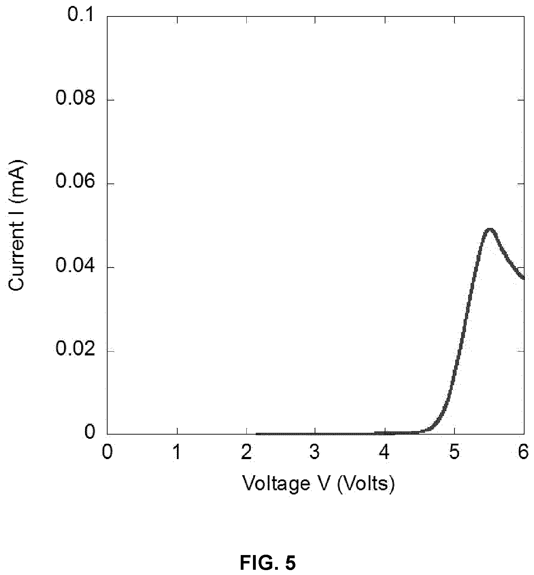

The electrolyte comprising polymer 1 and LiTFSI salt at a ratio of carbonyl oxygen atoms to Li cation 6:1 was sandwiched between SS working electrode and Lithium metal counter/reference electrode. Linear sweep voltammetry was carried out in a VMP3 (Biologic^{®}, Claix, France) system from OCV up to 6 volts at a scan rate of 1mv/sec to determine the electrochemical stability. As shown in Figure 5, the electrolytes of the invention seem to have an appreciable electrochemical stability up to 4.5V quite enough to operate high voltage NMC or NCA electrodes.

### Example 9: Cycle life of the cells

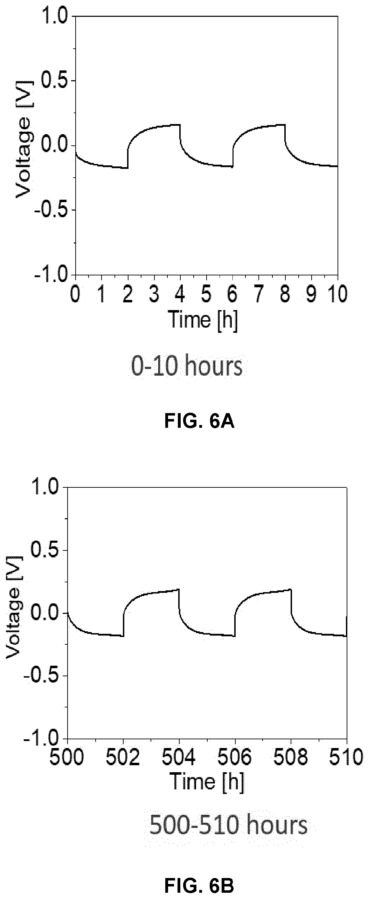

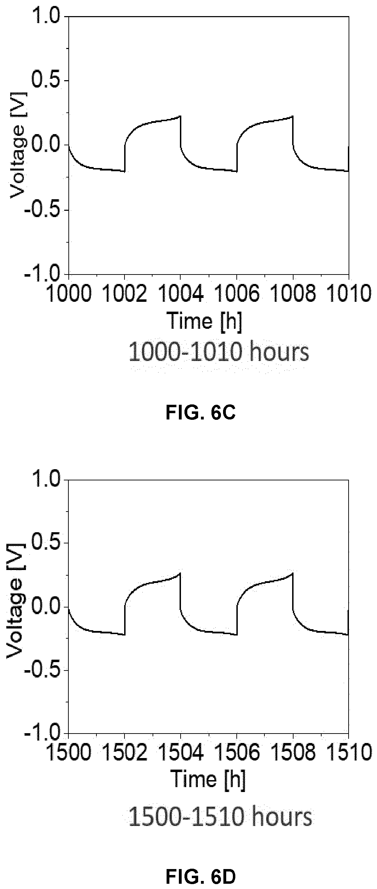

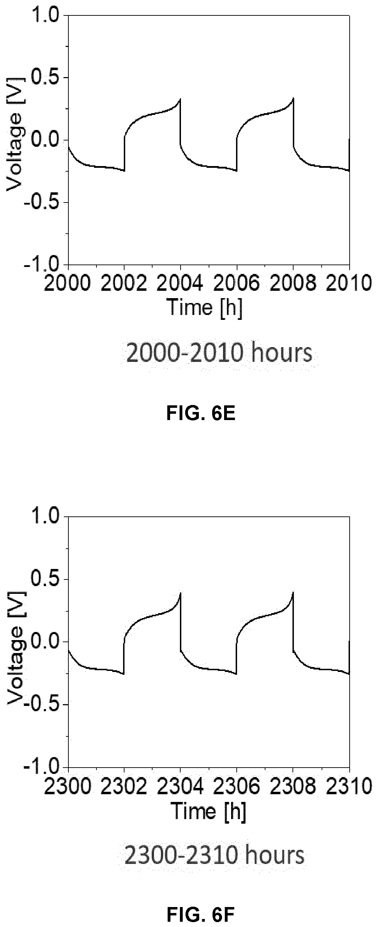

The electrolyte comprising polymer 1 and LiTFSI salt at a ratio of carbonyl oxygen atoms to Li cation 6:1 was sandwiched between 2 Li electrodes (symmetric cells) and CR2032 coin cells were assembled. In order to estimate the cycle life of the cells, these were subjected to Li plating/stripping for long cycles with a VMP3 (Biologic^{®}, Claix, France) system. As observed from Figures 6A-6F, the symmetric cells underwent stable plating/stripping cycles even after 2300 hours.

## Claims

1. Solid electrolyte comprising a polymer and a salt selected from the group consisting of a lithium salt, a sodium salt and mixtures thereof, wherein the polymer comprises at least 50 mol% of recurring units of formula (I) 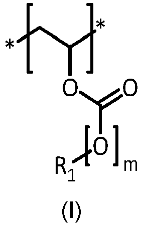 wherein
R₁ is selected from the group consisting of C₂-C₁₀ alkyl and C₂-C₁₀ alkylenyl-C-(=O)R₂,
R₂ is selected from the group consisting of -O-C₁-C₆ alkyl, and
m is 0 or 1.

2. Solid electrolyte according to claim 1, wherein m is 0.

3. Solid electrolyte according to any of claims 1 or 2, wherein
R₁ is selected from the group consisting of C₂-C₄ alkyl and C₂-C₄ alkylenyl-C-(=O)R₂, and
R₂ is selected from the group consisting of -O-C₁-C₃ alkyl.

4. Solid electrolyte according to any of the preceding claims, wherein R₁ is selected from the group consisting of ethyl, propyl and -(CH₂)₃-C(=O)OMe.

5. Solid electrolyte according to any of the preceding claims, wherein the polymer further comprises up to 50 mol% of recurring units of formula (II)

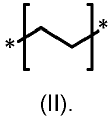

6. Solid electrolyte according to any of the preceding claims, wherein the polymer further comprises up to 25 mol% of recurring units of formula (III) 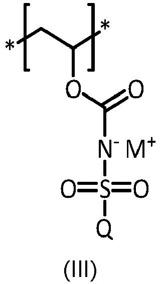 wherein
Q is selected from the group consisting of F and CF₃, and
M⁺ is selected from the group consisting of Li⁺ and Na⁺.

7. Solid electrolyte according to any of claims 1 to 4, wherein the polymer is a homopolymer.

8. Solid electrolyte according to any of claims 1 to 6, wherein the polymer is a copolymer.

9. Solid electrolyte according to any of the preceding claims, wherein the molar ratio of carbonyl-oxygen atoms to lithium and sodium cations is from 3:1 to 18:1, preferably from 5:1 to 8:1.

10. Solid electrolyte according to any of the preceding claims, wherein the salt is selected from the group consisting of LiCF₃SO₃ (LiTf), LiClO₄, LiPF₆, Li[FSO₂)₂N] (LiFSI), Li[CF₃SO₂)₂N] (LiTFSI), lithium-2-trifluoromethyl-4,5-dicyano-imidazole (LiTDI), NaCF₃SO₃ (NaTf), NaClO₄, NaPF₆, Na[FSO₂)₂N] (NaFSI), Na[CF₃SO₂)₂N] (NaTFSI), sodium-2-trifluoromethyl-4,5-dicyano-imidazole (NaTDI) and mixtures thereof.

11. Method for the preparation of a solid electrolyte as defined in any of the preceding claims, which comprises:
a) partial or total esterification of the hydroxyl groups of a polymer comprising at least 50 mol% of recurring units of formula (IV) and optionally up to 50 mol% of recurring units of formula (II) 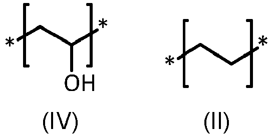 with a compound of formula (IV) or a compound of formula (V) 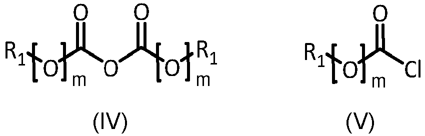 wherein R₁ and m are as defined in any of claims 1 to 4;
b) when partial esterification is carried out in step a), performing steps b1) and b2):
b1) formation of carbamate ester groups by reaction of hydroxyl groups of the partially esterified polymer obtained in step a) with an isocyanate of formula (VI) in the presence of a tertiary amine, 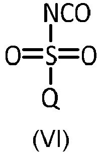 wherein Q is as defined in claim 6; and
b2) formation of the lithium or sodium salt of the carbamate ester groups of the polymer obtained in step b1) by treatment of said polymer with Li₂CO₃ for formation of the lithium salt, or Na₂CO₃ or NaHCO₃ for formation of the sodium salt; and
c) addition of a salt selected from the group consisting of a lithium salt, a sodium salt and mixtures thereof as defined in any of claims 1 or 10, to the polymer obtained in step a) or optionally to the polymer obtained in step b2).

12. Energy storage device comprising a solid electrolyte as defined in any of claims 1 to 10, a negative electrode and a positive electrode.

13. Energy storage device according to claim 12, wherein the negative electrode is a Li metal or Na metal negative electrode and the positive electrode comprises a material in the form of a spinel, olivine or layered oxide.

14. Use of a solid electrolyte as defined in any of claims 1 to 10 as a separator in a solid-state energy storage device.

15. Use of a solid electrolyte as defined in any of claims 1 to 10 as a catholyte or as a bilayer electrolyte in combination with other PEO/non-PEO based electrolytes.

## Patentansprüche

1. Fester Elektrolyt, umfassend ein Polymer und ein Salz, das aus der Gruppe ausgewählt ist, die aus einem Lithiumsalz, einem Natriumsalz und Gemischen davon besteht, wobei das Polymer wenigstens 50 Mol-% Repetiereinheiten der Formel (I) umfasst: 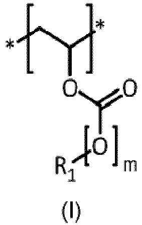 wobei
R₁ aus der Gruppe ausgewählt ist, die aus C₂-C₁₀-Alkyl und C₂-C₁₀-Alkylenyl-C-(=O)R₂ besteht,
R₂ aus der Gruppe ausgewählt ist, die aus -O-C₁-C₆-Alkyl besteht, und
m = 0 oder 1 ist.

2. Fester Elektrolyt gemäß Anspruch 1, wobei m = 0 ist.

3. Fester Elektrolyt gemäß einem der Ansprüche 1 oder 2, wobei
R₁ aus der Gruppe ausgewählt ist, die aus C₂-C₄-Alkyl und C₂-C₄-Alkylenyl-C-(=O)R₂ besteht, und
R₂ aus der Gruppe ausgewählt ist, die aus -O-C₁-C₃-Alkyl besteht.

4. Fester Elektrolyt gemäß einem der vorstehenden Ansprüche, wobei R₁ aus der Gruppe ausgewählt ist, die aus Ethyl, Propyl und -(CH₂)₃-C(=O)OMe besteht.

5. Fester Elektrolyt gemäß einem der vorstehenden Ansprüche, wobei das Polymer weiterhin bis zu 50 Mol-% Repetiereinheiten der Formel (II) umfasst:

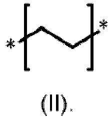

6. Fester Elektrolyt gemäß einem der vorstehenden Ansprüche, wobei das Polymer weiterhin bis zu 25 Mol-% Repetiereinheiten der Formel (III) umfasst: 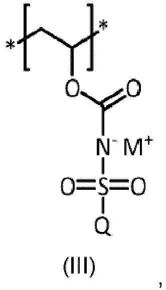 wobei
Q aus der Gruppe ausgewählt ist, die aus F und CF₃ besteht, und
M⁺ aus der Gruppe ausgewählt ist, die aus Li⁺ und Na⁺ besteht.

7. Fester Elektrolyt gemäß einem der Ansprüche 1 bis 4, wobei das Polymer ein Homopolymer ist.

8. Fester Elektrolyt gemäß einem der Ansprüche 1 bis 6, wobei das Polymer ein Copolymer ist.

9. Fester Elektrolyt gemäß einem der vorstehenden Ansprüche, wobei das Stoffmengenverhältnis von Carbonyl-Sauerstoffatomen zu Lithium- und Natriumkationen 3:1 bis 18:1, vorzugsweise 5:1 bis 8:1, beträgt.

10. Fester Elektrolyt gemäß einem der vorstehenden Ansprüche, wobei das Salz aus der Gruppe ausgewählt ist, die aus LiCF₃SO₃ (LiTf), LiClO₄, LiPF₆, Li[(FSO₂)₂N] (LiFSI), Li[(CF₃SO₂)₂N] (LiTFSI), Lithium-2-trifluormethyl-4,5-dicyanoimidazol (LiTDI), NaCF₃SO₃ (NaTf), NaClO₄, NaPF₆, Na[(FSO₂)₂N] (NaFSI), Na[(CF₃SO₂)₂N] (NaTFSI), Natrium-2-trifluormethyl-4,5-dicyano-imidazol (NaTDI) und Gemischen davon besteht.

11. Verfahren zur Herstellung eines festen Elektrolyten, wie er in einem der vorstehenden Ansprüche definiert ist, umfassend:
a) partielle oder vollständige Veresterung der Hydroxygruppen eines Polymers, das wenigstens 50 Mol-% Repetiereinheiten der Formel (IV) und gegebenenfalls bis zu 50 Mol-% Repetiereinheiten der Formel (II) umfasst: 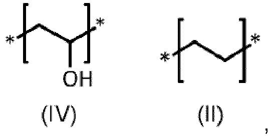 mit einer Verbindung der Formel (IV) oder einer Verbindung der Formel (V): 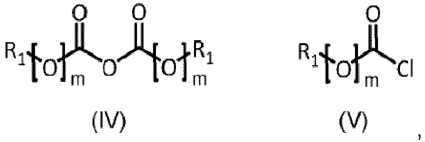 wobei R₁ und m wie in einem der Ansprüche 1 bis 4 definiert sind;
b) wenn in Schritt a) eine partielle Veresterung durchgeführt wird, Durchführen der Schritte b1) und b2):
b1) Bildung von Carbaminsäureestergruppen durch Reaktion von Hydroxygruppen des in Schritt a) erhaltenen partiell veresterten Polymers mit einem Isocyanat der Formel (VI) in Gegenwart eines tertiären Amins: 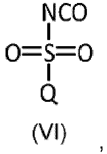 wobei Q wie in Anspruch 6 definiert ist; und
b2) Bildung des Lithium- oder Natriumsalzes der Carbaminsäureestergruppen des in Schritt b1) erhaltenen Polymers durch Behandlung des Polymers mit Li₂CO₃ für die Bildung des Lithiumsalzes oder Na₂CO₃ oder NaHCO₃ für die Bildung des Natriumsalzes; und
c) Zugabe eines Salzes, das aus der Gruppe ausgewählt ist, die aus einem Lithiumsalz, einem Natriumsalz und Gemischen davon besteht, wie sie in einem der Ansprüche 1 oder 10 definiert sind, zu dem in Schritt a) erhaltenen Polymer oder gegebenenfalls zu dem in Schritt b2) erhaltenen Polymer.

12. Energiespeichervorrichtung, umfassend einen festen Elektrolyten, wie er in einem der Ansprüche 1 bis 10 definiert ist, eine negative Elektrode und eine positive Elektrode.

13. Energiespeichervorrichtung gemäß Anspruch 12, wobei die negative Elektrode eine negative Elektrode aus Li-Metall oder Na-Metall ist und die positive Elektrode ein Material in Form eines Spinells, Olivins oder geschichteten Oxids umfasst.

14. Verwendung eines festen Elektrolyten, wie er in einem der Ansprüche 1 bis 10 definiert ist, als Separator in einer Feststoff-Energiespeichervorrichtung.

15. Verwendung eines festen Elektrolyten, wie er in einem der Ansprüche 1 bis 10 definiert ist, als Katholyt oder als zweischichtiger Elektrolyt in Kombination mit anderen Elektrolyten auf PEO-/Nicht-PEO-Basis.

## Revendications

1. Électrolyte solide comprenant un polymère et un sel choisi parmi le groupe constitué d'un sel de lithium, d'un sel de sodium et de mélanges de ceux-ci, dans lequel le polymère comprend au moins 50 % en moles de motifs récurrents de formule (1) : 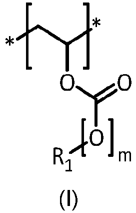 dans laquelle
R₁ est choisi parmi le groupe constitué d'un alkyle en C₂ à C₁₀ et d'un alkylényle en C₂ à C₁₀-C-(=O)R₂,
R₂ est choisi parmi le groupe constitué de -O-alkyle en C₁ à C₆, et
M est égal à 0 ou 1.

2. Électrolyte solide selon la revendication 1, dans lequel m est égal à 0.

3. Électrolyte solide selon l'une quelconque des revendications 1 ou 2, dans lequel
R₁ est choisi parmi le groupe constitué d'un alkyle en C₂ à C₄ et d'un alkylényle en C₂ à C₄-C-(=O)R₂, et
R₂ est choisi parmi le groupe constitué de -O-alkyle en C₁ à C₃.

4. Électrolyte solide selon l'une quelconque des revendications précédentes, dans lequel R₁ est choisi parmi le groupe constitué d'un éthyle, d'un propyle et de -(CH₂)₃-C(=O)OMe.

5. Électrolyte solide selon l'une quelconque des revendications précédentes, dans lequel le polymère comprend en outre jusqu'à 50 % en moles de motifs récurrents de formule (II) :

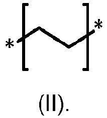

6. Électrolyte solide selon l'une quelconque des revendications précédentes, dans lequel le polymère comprend en outre jusqu'à 25 % en moles de motifs récurrents de formule (III) : 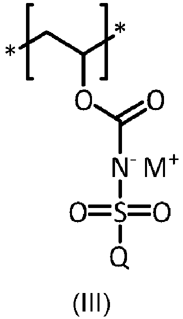 dans laquelle
Q est choisi parmi le groupe constitué de F et CF₃, et M⁺ est choisi parmi le groupe constitué de Li⁺ et Na⁺.

7. Électrolyte solide selon l'une quelconque des revendications 1 à 4, dans lequel le polymère est un homopolymère.

8. Électrolyte solide selon l'une quelconque des revendications 1 à 6, dans lequel le polymère est un copolymère.

9. Électrolyte solide selon l'une quelconque des revendications précédentes, dans lequel le rapport molaire des atomes d'oxygène carbonyle sur les cations lithium et sodium est compris entre 3:1 et 18:1, de préférence entre 5:1 et 8:1.

10. Électrolyte solide selon l'une quelconque des revendications précédentes, dans lequel le sel est choisi parmi le groupe constitué de LiCF₃SO₃ (LiTf), LiCIO₄, LiPFₑ, Li[FSO₂)₂N] (LiFSI), Li[CF₃SO₂)₂N] (LiTFSI), lithium-2-trifluorométhyl-4,5-dicyano-imidazole (LiTDI), NaCF₃SO₃ (NaTf), NaClO₄, NaPF₆, Na[FSO₂)₂N] (NaFSI), Na[CF₃SO₂)₂N] (NaTFSI), sodium-2-trifluorométhyl-4,5-dicyano-imidazole (NaTDI) et de mélanges de ceux-ci.

11. Procédé pour la préparation d'un électrolyte solide selon l'une quelconque des revendications précédentes, qui comprend:
a) une estérification partielle ou totale des groupes hydroxyle d'un polymère comprenant au moins 50 % en moles de motifs récurrents de formule (IV) et facultativement jusqu'à 50 % en moles de motifs récurrents de formule (II) : 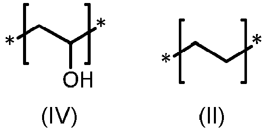 avec un composé de formule (IV) ou un composé de formule (V) : 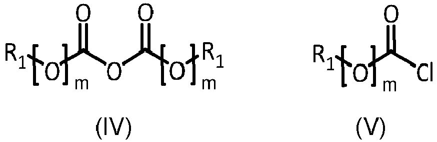 dans lesquelles R₁ et m sont tels que défini dans l'une quelconque des revendications 1 à 4,
b) lorsqu'une estérification partielle est réalisée à l'étape a), exécuter les étapes b1) et b2) :
b1) formation de groupes ester de carbamate par réaction de groupes hydroxyle du polymère partiellement estérifié obtenu à l'étape a) avec un isocyanate de formule (VI) en présence d'une amine tertiaire, 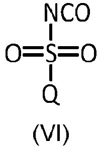 dans laquelle Q est tel que défini dans la revendication 6, et
b2) formation du sel de lithium ou de sodium des groupes ester de carbamate du polymère obtenu à l'étape b1) par traitement dudit polymère avec du Li₂CO₃ pour la formation du sel de lithium, ou du Na₂CO₃ ou NaHCO₃ pour la formation du sel de sodium, et
c) addition d'un sel choisi parmi le groupe constitué d'un sel de lithium, d'un sel de sodium et de mélanges de ceux-ci selon l'une quelconque des revendications 1 ou 10, au polymère obtenu à l'étape a) ou facultativement au polymère obtenu à l'étape b2).

12. Dispositif de stockage d'énergie comprenant un électrolyte solide selon l'une quelconque des revendications 1 à 10, une électrode négative et une électrode positive.

13. Dispositif de stockage d'énergie selon la revendication 12, dans lequel l'électrode négative est une électrode négative en métal Li ou en métal Na et l'électrode positive comprenant un matériau sous la forme d'un spinelle, d'une olivine ou d'un oxyde en couches.

14. Utilisation d'un électrolyte solide selon l'une quelconque des revendications 1 à 10 en tant que séparateur dans un dispositif de stockage d'énergie à l'état solide.

15. Utilisation d'un électrolyte solide selon l'une quelconque des revendications 1 à 10 en tant que catholyte ou en tant qu'électrolyte bicouche en combinaison avec d'autres électrolytes à base de PEO/non-PEO.
